# EUROPÄISCHE PATENTSCHRIFT

(11) **EP 1 530 670 B1**
(45) Veröffentlichungstag und Bekanntmachung des Hinweises auf die Patenterteilung: **10.05.2006**
(21) Anmeldenummer: 03747919.3
(22) Anmeldetag: 21.08.2003
(51) Int. Cl.: F01D 11/08, F04D 29/54, F04D 27/02

(54) **REZIRKULATIONSSTRUKTUR FÜR TURBOVERDICHTER**
RECIRCULATION STRUCTURE FOR A TURBOCOMPRESSOR
STRUCTURE DE RECIRCULATION D'UN TURBOCOMPRESSEUR

(30) Priorität: 23.08.2002 DE 10238837; 03.07.2003 DE 10330084
(43) Veröffentlichungstag der Anmeldung: 18.05.2005
(73) Patentinhaber: MTU Aero Engines GmbH, 80995 München (DE)
(72) Erfinder: SEITZ, Peter, A., 85232 Günding/Bergkirchen (DE)
(86) Internationale Anmeldenummer: PCT/EP2003/009265
(87) Internationale Veröffentlichungsnummer: WO 2004/018844

(56) Entgegenhaltungen:
- EP-A- 0 719 907
- US-A- 5 282 718
- US-B1- 6 264 425

## Beschreibung

Die Erfindung betrifft eine Rezirkulationsstruktur für Turboverdichter, gemäß dem Oberbegriff des Patentanspruches 1.

Rezirkulationsstrukturen für Turboverdichter sind seit geraumer Zeit bekannt und werden in der Fachwelt in der Regel als "Casing Treatments" bezeichnet. Diese haben primär die Aufgabe, den aerodynamisch stabilen Betriebsbereich des Verdichters zu erhöhen, wobei die sogenannte Pumpgrenze zu höheren Verdichterdrücken, d.h. zu einer höheren Verdichterbelastung hin, verschoben wird. Die für einen örtlichen Strömungsabriss und letztlich für das Pumpen des Verdichters verantwortlichen Störungen treten gehäuseseitig an den Laufschaufelenden einer bzw. mehrerer Verdichterstufen, nabenseitig an den radial innenliegenden Leitschaufelenden auf, da in diesen Bereichen die aerodynamische Belastung am höchsten ist. Durch Rezirkulation der zwischen den Schaufelspitzen mit Schaufeldrehzahl umlaufenden, eine reduzierte Energie aufweisenden "Luftteilchen" in den Hauptstrom unter Energiezunahme wird die Strömung im Bereich der Schaufelenden wieder stabilisiert. Da Strömungsstörungen in der Regel nicht gleichmäßig über den Stufenumfang auftreten, sollte strömungstechnisch auch ein Ausgleich in Umfangsrichtung, zusätzlich zur im wesentlichen axialen Rezirkulation, möglich sein. Der Hauptnachteil der bekannten "Casing Treatments" liegt darin, dass sie zwar die Pumpgrenze erhöhen, aber gleichseitig den Verdichterwirkungsgrad reduzieren.

Die DE 33 22 295 C3 schützt einen Axialventilator mit einem "Casing Treatment". Man erkennt dort eine Ringkammer (8), in der Leitelemente (9) fest angeordnet sind. Im stromabwärtigen Bereich über den Laufschaufelenden befindet sich ein in Umfangsrichtung offener Bereich, in den sich die Leitelemente nicht erstrecken. Charakteristisch für diese Art "Casing Treatment" ist ein etwa mit der Kontur des Hauptströmungskanales fluchtender, geschlossener Ring (7), der den hinteren Eintrittsbereich vom vorderen Austrittsbereich der Rezirkulationsstruktur trennt und einen glatten, geschlossenen Oberflächenbereich bildet.

Ein ganz ähnliches "Casing Treatment" ist aus der DE 35 39 604 C1 bekannt, wobei hier im vorderen und hinteren Bereich der Ringkammer (7) ein in Umfangsrichtung offener Bereich vorhanden ist. Man beachte auch hier den radial innenliegenden Ring 6.

Ein neueres "Casing Treatment" ist aus der US 5,282,718 A bekannt. Hier sind die Ringkammer (18, 28) und die Leitelemente (24) strömungstechnisch verfeinert. Auch hier sind Ein- und Austritt der Rezirkulationsströmung durch einen massiven, zu den Schaufeln hin glatten und geschlossenen Ring getrennt. Derartige Ringe im Schaufelbereich müssen für den Fall der Berührung mit den Schaufelspitzen in der Regel mit einem Anstreif- bzw. Einlaufbelag versehen werden.

Ein "Casing Treatment" mit einem Ring im Schaufelbereich und mit einem Einlaufbelag auf der schaufelzugewandten Oberfläche des Ringes ist aus der EP 0 719 907 A bekannt. Der Ring ist hier als "third arcuate member" (Pos. 46), der Einlaufbelag als "layer of abradable material" (Pos. 72) bezeichnet. Die Leitelemente, hier als "vane walls" bezeichnet (Pos. 64), sind radial außen auf dem Ring (Pos. 46) sowie an dessen Vorder- und Hinterkante angeordnet (Pos. 78 und 80).

Es gibt weitere "Casing Treatments" mit axialen bzw. axial schrägen Nuten, wie z.B. in der US 5,137,419 A offenbart. Diese bleiben hier deshalb außer Betracht, da mangels Verbindung der Nuten untereinander bei diesen Versionen kein Strömungsausgleich in Umfangsrichtung möglich ist.

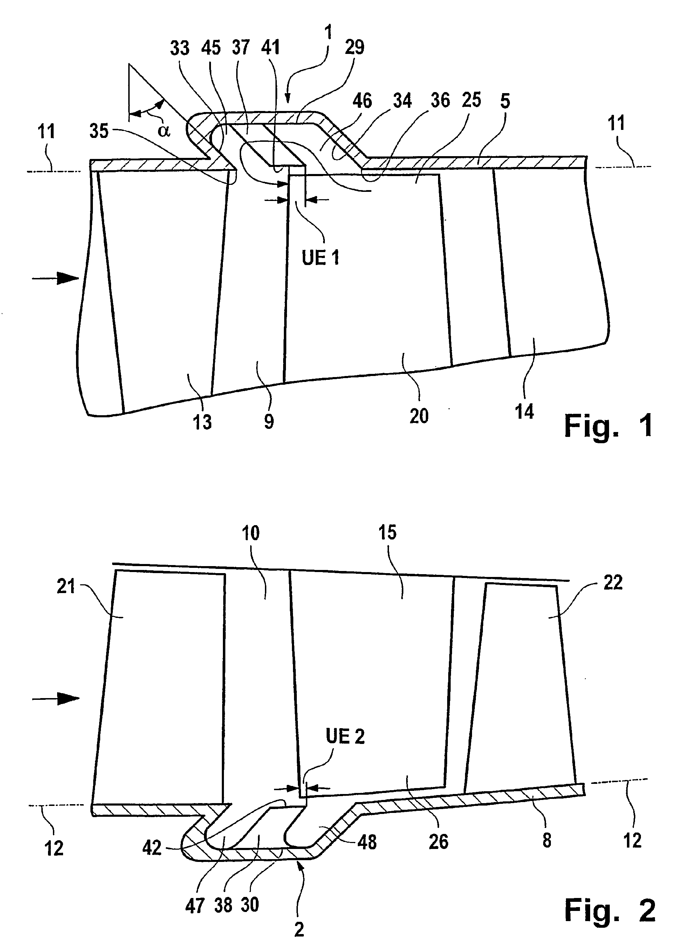

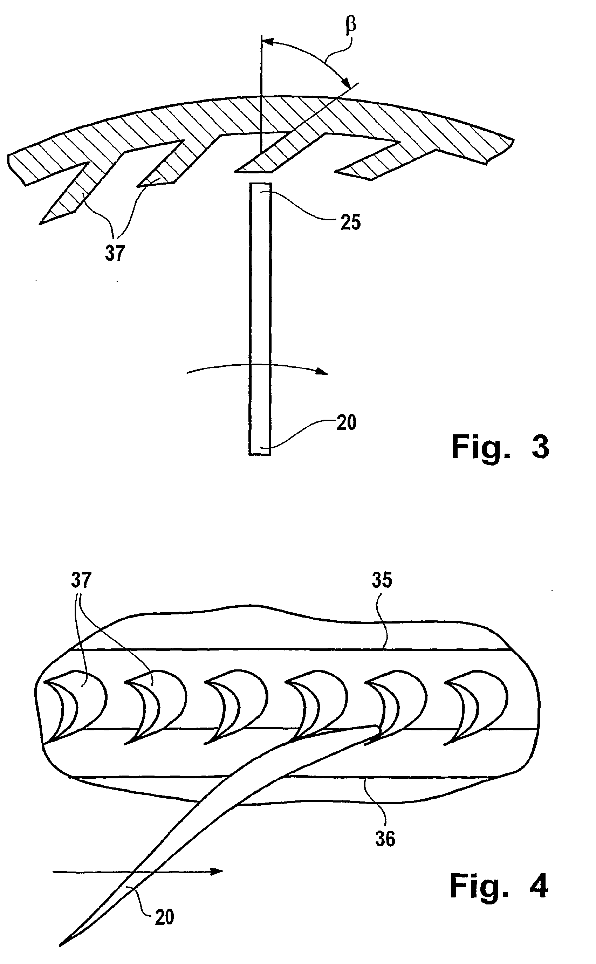

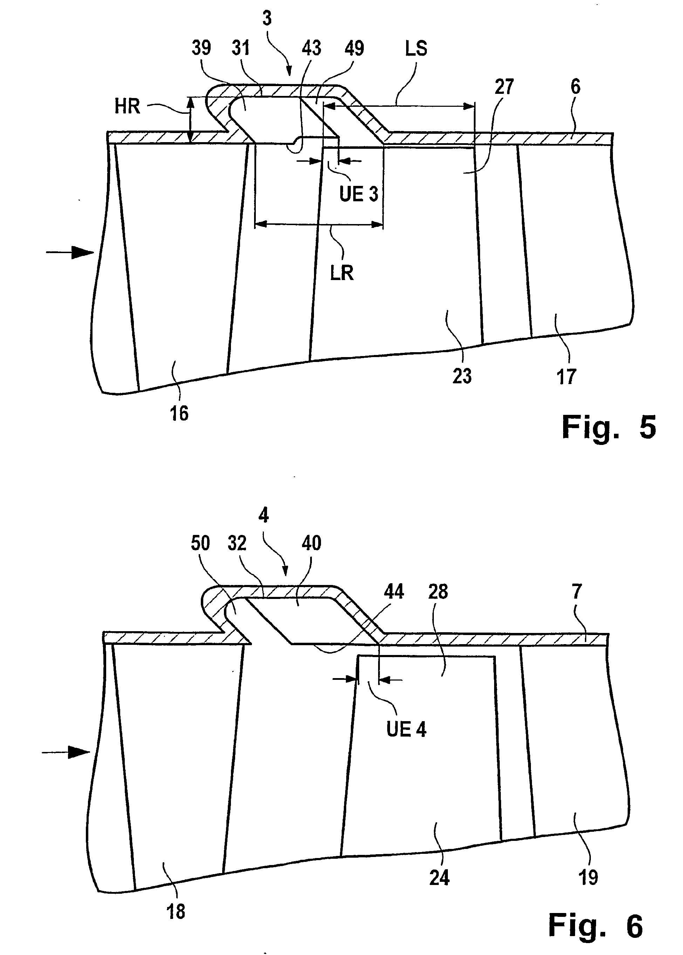

Die US 4,511,308 A schützt Ventilatoren (fans, blowers) mit unterschiedlich ausgeführten "Casing Treatments". Die einfachste Ausführung gemäß Figur 6 besitzt nur eine Ringkammer ohne Leitelemente. Bei den Ausführungen gemäß Figur 1 und 3 sind Leitelemente in der Ringkammer befestigt, die stromaufwärtige Gehäusewand (22) ist nach Art eines zylindrischen bzw. konischen Rohrstutzens bis über die radial inneren Kanten der Leitelemente (21) verlängert, so dass am stromaufwärtigen, vorderen Ende der Ringkammer kein Austritt der Rezirkulationsströmung in die Hauptströmung möglich ist. Figur 5 zeigt Leitelemente (21), die an der vorderen Stirnwand und am Außenumfang der Ringkammer befestigt sind und im übrigen freistehend ausgeführt sind. Hier gibt es kein rohr- oder ringartiges, die Leitelemente in Umfangsrichtung verbindendes bzw. abdeckendes Element. Die freien, radial inneren Kanten der Leitelemente (21) steigen von vorne nach hinten vom Durchmesser des Eintrittsgehäuses (15) bis zum größten Durchmesser der Ringkammer (16) an. Somit überlappen sich die Leitelemente im stromabwärtigen Bereich zwar axial mit dem stromaufwärtigen Bereich der Schaufelenden (14), durch den großen radialen Abstand zwischen den Leitelementen (21) und den Schaufelenden (14) ist aber keine wirksame und definierte Führung der Rezirkulationsluft möglich. Nachteilig ist weiterhin das große Volumen der Ringkammer (16) in Relation zu den Laufschaufelabmessungen. Eine derartige Ausführung ist weder aerodynamisch noch konstruktiv für einen Turboverdichter geeignet.

Angesichts der Nachteile der Lösungen nach dem Stand der Technik besteht die Aufgabe der Erfindung darin, eine Rezirkulationsstruktur für Turboverdichter bereitzustellen, die eine deutliche Erhöhung der Pumpgrenze und somit eine deutliche Vergrößerung des stabilen Betriebsbereiches ohne relevante Verschlechterung des Verdichterwirkungsgrades ermöglicht.

Diese Aufgabe wird durch die in Patentanspruch 1 gekennzeichneten Merkmale gelöst, in Verbindung mit den gattungsbildenden Merkmalen in dessen Oberbegriff. Das Wesen der Erfindung liegt darin, dass die ringraumzugewandten Spitzen der Leitelemente auf bzw. nahe bei der Kontur des Hauptströmungskanales liegen und axial mit den freien Schaufelenden überlappen oder axial an den. Bereich der freien Schaufelenden angrenzen. Ringartige Elemente mit Anstreifbelägen etc. können dabei entfallen. Die obengenannten Patentschriften zeigen, dass die Fachwelt bis dato in aller Regel versucht hat, Rezirkulationsstrukturen zum Hauptströmungskanal, d.h. zum sog. Ringraum hin über einen möglichst großen axialen Bereich glatt, spaltarm und geschlossen auszuführen, um eine möglichst strömungsgünstige und verlustarme Verlängerung der Kontur des Hauptströmungskanales zu bewirken. Die Erfindung führt demgegenüber zu Spalten, zerklüfteten Oberflächen etc. und erscheint somit nachteilig und unzweckmäßig zu sein. Versuche haben jedoch gezeigt, dass die erfindungsgemäße Rezirkulationsstruktur bekannten Lösungen sowohl hinsichtlich Pumpgrenzanhebung als auch hinsichtlich Wirkungsgrad überlegen ist. Dies ist aerodynamisch dadurch zu erklären, dass die freie, ungezwungene Ausbildung der Rezirkulationsströmung in der offenen Ringkammer mit freistehenden Leitelementen und Strömungsverbindungen in Umfangsrichtung wichtiger ist, als eine möglichst spaltfreie Verlängerung der Kontur des Hauptströmungskanales. Das Fehlen eines geschlossenen Rings hat die weiteren Vorteile, dass kein Anstreif bzw. Einlaufbelag für die Leitelemente erforderlich ist und radialer Bauraum sowie Gewicht eingespart wird, was zu strukturmechanischen Vorteilen führt. Eine definierte Führung der Rezirkulationsströmung - ohne Ringelemente - wird aber nur dann erreicht, wenn die freien Kanten der Leitelemente relativ nahe bei den Schaufelkanten verlaufen und axial teilweise mit letzteren überlappen oder zumindest an deren Bereich angrenzen. Nur so wird letztlich ein kompaktes, verdichtergeeignetes "Casing Treatment" möglich. Das Verhältnis der axialen Länge der Ringkammer zur axialen Länge der Schaufelenden beträgt 0,2 bis 1,5. Bei breiten Schaufeln mit großer axialer Erstreckung am Schaufelende wird das Verhältnis näher bei 0,2, bei schlanken Schaufeln mit geringer axialer Erstreckung am Schaufelende näher bei 1,5 liegen.

In bevorzugter Ausgestaltung beträgt das Verhältnis der radialen Höhe zur axialen Länge der Ringkammer 0,1 bis 1,0. Bei Flugtriebwerken mit sehr strengen Vorgaben hinsichtlich Platzbedarf, Konturverlauf etc. wird man versuchen, mit einem eher kleinen Verhältnis, d.h. geringer radialer Höhe, auszukommen. Bei stationären Anwendungen mit ausreichenden Platzangebot kann man eher an die obere Grenze gehen. Auch bei axial kurzen Ringkammern wird man sich mehr der oberen Grenze annähern.

Weiterhin wird bevorzugt, dass die ringraumzugewandten Spitzen der Leitelemente zumindest im Bereich der freien Schaufelenden radial so weit zurückgesetzt sind, dass im Normalbetrieb keine Berührung zwischen den Schaufelenden und den Leitelementen erfolgt. Dies trägt der Tatsache Rechnung, dass die Laufschaufelspitzen beim Anstreifen beschädigt werden können, insbesondere an harten, unnachgiebigen Leitelementspitzen. Das Zurücksetzen der Leitelementspitzen steht nicht im Widerspruch zu der Forderung, dass die Spitzen auf bzw nahe bei der Kontur des Hauptströmungskanales liegen sollen, da die geringen radialen Spaltmaße zur Vermeidung des Anstreifens strömungstechnisch praktisch ohne Belang sind, d.h. die Rezirkulation nicht negativ beeinflussen.

Auch in den weiteren Unteransprüchen sind bevorzugte Ausgestaltungen der Rezirkulationsstruktur nach dem Hauptanspruch sowie ein Turboverdichter, eine Fluggasturbine und eine stationäre Gasturbine gekennzeichnet.

Die Erfindung wird anschließend anhand der Zeichnungen noch näher erläutert. Dabei zeigen in vereinfachter, nicht maßstäblicher Darstellung:
Figur 1 einen Teillängsschnitt durch einen Verdichter in Axialbauart im Bereich einer gehäuseseitigen Rezirkulationsstruktur,
Figur 2 einen vergleichbaren Teillängsschnitt im Bereich einer nabenseitigen Rezirkulationsstruktur,
Figur 3 einen Teilquerschnitt durch die Rezirkulationsstruktur gemäß Figur 1,
Figur 4 eine Teilansicht der Rezirkulationsstruktur gemäß Figur 1 und 3 radial von Innen,
Figur 5 einen Teillängsschnitt im Bereich einer gehäuseseitigen, gegenüber Figur 1 modifizierten Rezirkulationsstruktur,
Figur 6 einen Teillängsschnitt im Bereich einer gehäuseseitigen, gegenüber Figur 1 und Figur 5 modifizierten Rezirkulationsstruktur, und
Figur 7 einen weiteren Teillängsschnitt im Bereich einer gehäuseseitigen, nochmals modifizierten Rezirkulationsstruktur.

Die Rezirkulationsstruktur 1 gemäß Figur 1 ist in das Gehäuse 5 eines Turboverdichters integriert und somit als "Casing Treatment" zu bezeichnen. Die Strömungsrichtung im beschaufelten Hauptströmungskanal 9 ist links mit einem Pfeil angedeutet, sie verläuft also von links nach rechts. Die Strömung trifft im gezeigten Bereich zunächst auf einen Leitschaufelkranz 13, dann auf einen Laufschaufelkranz 20 und schließlich wieder auf einen Leitschaufelkranz 14. Die radial äußere Kontur 11 des Hauptströmungskanals 9 entspricht der inneren Kontur des Gehäuses 5 und ist zur Verdeutlichung links und rechts der eigentlichen Darstellung strichpunktiert fortgesetzt. Die statische Rezirkulationsstruktur 1 wirkt mit dem Laufschaufelkranz 20 zusammen und liegt großteils axial vor diesem, d.h. stromaufwärts. Die zusammen mit den Leitelementen 37 die Rezirkulationsstruktur 1 bildende Ringkammer 29 grenzt radial von außen an den Hauptströmungskanal 9 an und ist zu diesem hin offen. Die Spitzen 41 der Leitelemente 37 liegen auf oder nahe bei der Kontur 11 des Hauptströmungskanales 9, d.h. sie fluchten zumindest annähernd mit der Gehäuseinnenkontur. Die Leitelemente 37 können aus einem Metall, wie einer Ni-Basislegierung, oder aus einem Leichtmetall, wie Al, oder aus einem Kunststoff, wie Thermoplaste, Duroplaste oder Elastomere, bestehen. Die vordere Wand 33 und die hintere Wand 34 der Ringkammer 29 sind ausgehend von ihren radial inneren Kanten 35, 36 nach vorne geneigt, um für die mit einem kleinen Pfeil angedeutete Rezirkulation strömungsgünstig zu sein.

Der Neigungswinkel der vorderen Wand ist mit α, bezeichnet, er kann gleich oder unterschiedlich in Relation zum Winkel der hinteren Wand 34 sein. Zwischen der vorderen Wand 33, den Leitelementen 37 und der hinteren Wand 34 sind Aussparungen 45, 46 vorhanden, die Strömungsvorgänge innerhalb der Ringkammer in Umfangsrichtung zulassen, zusätzlich zur vorwiegend axial verlaufenden Rezirkulation. Mit 25 sind die freien Schaufelenden des Laufschaufelkranzes 20 bezeichnet, in deren Bereich Strömungsstörungen am ehesten auftreten. Die axiale Überlappung zwischen den Leitelementen 37 und den Schaufelenden 25 ist mit UE 1 bezeichnet.

Im Unterschied zu Figur 1 zeigt Figur 2 eine in eine rotierende Nabe 8 integrierte Rezirkulationsstruktur 2. Man erkennt im Hauptströmungskanal 10 von links nach rechts einen Laufschaufelkranz 21, einen Leitschaufelkranz 15 mit radial inneren, freien Schaufelenden 26 und einen Laufschaufelkranz 22. Eine solche, neue Anordnung einer Rezirkulationsstruktur wäre konsequenterweise als "Hub Treatment" zu bezeichnen. Die aus Ringkammer 30 und Leitelementen 38 bestehende Rezirkulationsstruktur 2 mit vorderen und hinteren Aussparungen 47, 48 zwischen der vorderen und hinteren Wand der Ringkammer 30 und den dazu beabstandeten Leitelemente 38 wirkt mit einem großteils stromabwärts liegenden Leitschaufelkranz 15 zusammen. Da hier das "Hub Treatment" rotiert und der Leitschaufelkranz 15 steht, wirkt die Rotordrehzahl voll als Differenzdrehzahl. Die Wirkungsweise unterschiedet sich prinzipiell nicht von der eines "Casing Treatments". In einem Turboverdichter können "Casing Treatment" und "Hub Treatment" auch kombiniert werden und in mehreren Stufen zur Anwendung kommen. Die radial innere Kontur 12 des Hauptströmungskanals entspricht hier der Außenkontur der Nabe 8. UE 2 ist die axiale Überlappung der Leitelemente 38 mit den Schaufelenden 26 des Leitschaufelkranzes 15. Die Leitelemente 38 sind am Übergang zu den Wänden der Ringkammer 30 festigkeitserhöhend gerundet.

Figur 3 zeigt im Querschnitt ein Detail aus Fig. 1. Die Leitelemente 37 sind um einen Winkel β so zur Radialen geneigt, dass die Schaufelenden 25 des Laufschaufelkranzes 20 die Rezirkulationsströmung ohne größere Verluste in die Ringkammer 29 hineinfördern, wobei die Drehrichtung (siehe Pfeil) zu beachten ist. Der Neigungswinkel β kann von radial Innen nach Außen bis auf den Wert "Null" abnehmen bei entsprechend gekrümmten Leitelementen.

Eine radiale Anordnung der Leitelemente, d.h. β = 0° ist möglich, aber weniger strömungsgünstig.

Die Ansicht gemäß Figur 4 zu Figur 3 zeigt die Schaufelprofilierung des Laufschaufelkranzes 20 in Verbindung mit seiner Drehrichtung (Pfeil) und vermittelt eine gute Vorstellung von der strömungsgünstigen Profilierung und Krümmung der Leitelemente 37. Der Fachmann vermag zu erkennen, dass der Rezirkulationsaustritt im Bereich der stromaufwärtigen Kante 35 der Ringkammer 29 in Relation zum Laufschaufelkranz 20 hier mit Gegendrall erfolgen soll. Mit 36 ist die stromabwärtige Kante der Ringkammer bezeichnet.

Die Rezirkulationsstruktur 3 gemäß Figur 5 ist ein "Casing Treatment" mit einer in ein Gehäuse 6 integrierten Ringkammer 31. Die Leitelemente 39 reichen hier bis zur vorderen Wand der Ringkammer 31, im hinteren Bereich sind Aussparungen 49 vorhanden, in unmittelbarer Nähe der Schaufelenden 27 des Laufschaufelkranzes 23. UE 3 bezeichnet die axiale Überlappung der Leitelemente 39 mit den Schaufelenden 27. LR ist die axiale Länge der Ringkammer 31, HR deren radiale Höhe. Mit LS ist die axiale Länge der Schaufelenden 27 bezeichnet. Das Verhältnis LR zu LS soll 0,2 bis 1,5 betragen, das Verhältnis HR zu LR 0,1 bis 1,0. Die Spitzen 43 der Leitelemente 39 sind hier im Rotationsbereich der Schaufelenden 27 radial nach außen versetzt, um eine Berührung zu vermeiden. Mit 16 und 17 sind Leitschaufelkränze bezeichnet.

Die Rezirkulationsstruktur 4 in Figur 6 mit Ringkammer 32 und Leitelementen 40 ist ebenfalls ein "Casing Treatment", das in ein Gehäuse 7 integriert ist und mit einem Laufschaufelkranz 24 zusammenwirkt. Im Unterschied zu Figur 5 reichen hier die Leitelemente 40 bis zur hinteren Wand der Ringkammer 32. Aussparungen 50 sind hier aufgrund der zur vorderen Wand der Ringkammer 32 beabstandeten Leitelemente 40 im vorderen Bereich vorgesehen. Die Spitzen 44 der Leitelemente 40 reichen bis in den Rotationsbereich der Schaufelenden 28.

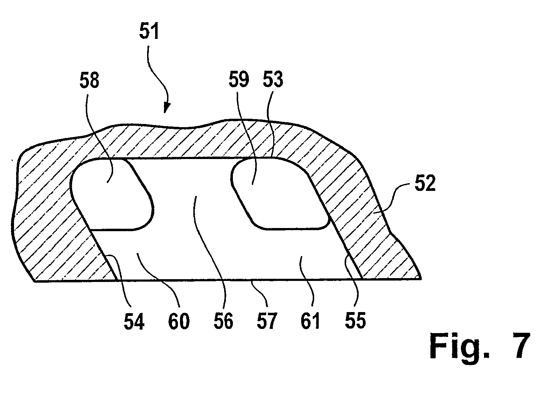

Die Rezirkulationsstruktur 51 gemäß Figur 7 unterscheidet sich von den vorstehend beschriebenen Ausführungen dadurch, dass für Strömungsvorgänge in Umfangsrichtung der Ringkammer 53 allseitig begrenzte Öffnungen 58, 59 im vorderen und hinteren Bereich der Leitelemente 56 vorhanden sind. Somit verbleiben festigkeitserhöhende Stege 60, 61, über welche die Leitelemente 56 mit der vorderen und hinteren Wand 54, 55 der Ringkammer 53 im Gehäuse 52 fest verbunden sind. Alternativ kann eine Öffnung 58 bzw. 59 durch eine zuvor beschriebene Aussparung aufgrund einer Beabstandung der Leitelemente zur Wand der Ringkammer 53 ersetzt sein. Es versteht sich, dass auch nur eine Öffnung 58 bzw. 59 im vorderen oder hinteren Bereich der Leitelemente vorgesehen sein kann.

Für alle Ausgestaltungen der Rezirkulationsstruktur gilt, dass die Spitzen 41 bis 44 und 57 der Leitelemente 37 bis 40 und 56 nicht radial nach außen versetzt sein müssen, wenn die Leitelemente aus einem weichen Leichtmetall oder einem Kunststoff hergestellt sind, weil eine Berührung mit den Schaufelenden 25 bis 28 zugelassen werden kann, ohne dass die Schaufeln beschädigt werden.

## Patentansprüche

1. Rezirkulationsstruktur für Turboverdichter, insbesondere von Gasturbinen, mit einer konzentrisch zur Verdichterachse im Bereich der freien Schaufelenden eines Schaufelkranzes angeordneten Ringkammer, deren axiale Mitte stromaufwärts, d.h. vorderhalb der axialen Mitte der freien Schaufelenden liegt, und die radial an die Kontur des Hauptströmungskanales, des sogenannten Ringraumes, angrenzt, und mit einer Vielzahl von in der Ringkammer angeordneten, über deren Umfang verteilten Leitelementen, wobei die Ringkammer im vorderen und/oder hinteren Bereich einen Strömungsdurchtritt in Umfangsrichtung ermöglicht, und die Leitelemente mit zumindest einer Wand der Ringkammer verbunden und im übrigen freistehend ausgeführt sind, **dadurch gekennzeichnet, dass** die ringraumzugewandten Spitzen (41 bis 44, 57) der Leitelemente (37 bis 40, 56) auf und/oder nahe bei der Kontur (11,12) des Hauptströmungskanales (9,10) verlaufen und axial mit den freien Schaufelenden (25 bis 28) überlappen (UE 1 bis UE 4) oder axial an den Bereich der freien Schaufelenden (25 bis 28) angrenzen, und dass das Verhältnis der axialen Länge (LR) der Ringkammer (29 bis 32, 53) an der Kontur (11,12) des Hauptströmungskanales (9,10) zur axialen Länge (LS) der Schaufelenden (25 bis 28) 0,2 bis 1,5 beträgt.

2. Rezirkulationsstruktur nach Anspruch 1, **dadurch gekennzeichnet, dass** das Verhältnis der radialen Höhe (HR) zur axialen Länge (LR) der Ringkammer (29 bis 32, 53) 0,1 bis 1,0 beträgt.

3. Rezirkulationsstruktur nach Anspruch 1 oder 2, **dadurch gekennzeichnet, dass** die axial vordere Wand (33, 54) und die axial hintere Wand (34, 55) der Ringkammer (29 bis 32, 53) ausgehend von ihren kreisförmig umlaufenden Kanten (35,36) auf der Kontur (11) des Hauptströmungskanales (9) um den gleichen oder einen unterschiedlichen Winkel (α) stromaufwärts, d.h. schräg nach vorne, geneigt sind.

4. Rezirkulationsstruktur nach Anspruch 3, **dadurch gekennzeichnet, dass** der Winkel (α) der axial vorderen und der axial hinteren Wand der Ringkammer ausgehend von der Radialrichtung einen Wert im Bereich von 30° bis 60° aufweist.

5. Rezirkulationsstruktur nach einem der vorhergehenden Ansprüche, **dadurch gekennzeichnet, dass** die Leitelemente (37 bis 40, 56) schaufelartig, räumlich gekrümmt, mit variierender Dicke und mit definierten Profilschnitten ausgeführt sind.

6. Rezirkulationsstruktur nach einem der vorhergehenden Ansprüche, **dadurch gekennzeichnet, dass** die Leitelemente (37 bis 40, 56) - bei axialer Blickrichtung - in Umfangsrichtung um einem Winkel (β) geneigt oder in Umfangsrichtung gekrümmt angeordnet sind, wobei der Winkel (β) über die Länge der Leitelemente (37 bis 40, 56) variieren kann und so gewählt ist, dass der Eintritt der Rezirkulationsströmung in die Ringkammer (29 bis 32, 53) strömungstechnisch erleichtert wird, d.h. strömungsgünstig erfolgt.

7. Rezirkulationsstruktur nach einem der vorhergehenden Ansprüche, **dadurch gekennzeichnet, dass** die ringraumzugewandten Spitzen (43) der Leitelemente (39) zumindest im Bereich der freien Schaufelenden (27) radial so weit zurückgesetzt sind, dass im Normalbetrieb des Turboverdichters keine Berührung zwischen den Schaufelenden (27) und den Leitelementen (39) erfolgt.

8. Rezirkulationsstruktur nach einem der vorhergehenden Ansprüche, **dadurch gekennzeichnet, dass** die Leitelemente (37 bis 40) aus einem Metall, wie Stahl oder einer Ni- oder einer Co-Basislegierung, einem Leichtmetall, wie Al, oder einem Kunststoff, wie Thermoplaste, Duroplaste oder Elastomere, bestehen.

9. Rezirkulationsstruktur nach Anspruch 8, **dadurch gekennzeichnet, dass** die ringraumzugewandten Spitzen (41 bis 44) der Leitelemente (37 bis 40) im Fall von Leitelementen aus Leichtmetall oder Kunststoff so nahe bei den freien Schaufelenden (25 bis 28) liegen, dass im Betrieb eine Berührung möglich ist.

10. Rezirkulationsstruktur nach einem der vorhergehenden Ansprüche, **dadurch gekennzeichnet, dass** der Strömungsdurchtritt in Umfangsrichtung durch Öffnungen (58, 59) im vorderen und/oder hinteren Bereich der Leitelemente (37 bis 40, 56) erfolgt.

11. Rezirkulationsstruktur nach einem der vorhergehenden Ansprüche, **dadurch gekennzeichnet, dass** die Ringkammer (29 bis 32, 53) und die Leitelemente (37 bis 40, 56) integral mit einem sie aufnehmenden Bauteil (5 bis 7, 8, 52) ausgebildet sind.

12. Rezirkulationsstruktur nach einem der Ansprüche 1 bis 10, **dadurch gekennzeichnet, dass** die Ringkammer (29 bis 32, 53) einschließlich der Leitelemente (37 bis 40, 56) einstückig oder als zumindest zwei in Umfangsrichtung aneinandergrenzende Segmente ausgeführt und lösbar an einem diese aufnehmenden Bauteil (5 bis 7, 8, 52) befestigt ist.

13. Rezirkulationsstruktur nach Anspruch 1 oder 12, **dadurch gekennzeichnet, dass** sie gegossen, insbesondere feingegossen oder spanabhebend oder elektrochemisch (ECM) gefertigt ist.

14. Rezirkulationsstruktur nach einem der Ansprüche 1 bis 10, **dadurch gekennzeichnet, dass** die Leitelemente(37 bis 40) separat als einzelne Bauteile oder Bauteilgruppen, insbesondere als Leitelementsegmente, ausgeführt und lösbar in der Ringkammer (29 bis 32) befestigt sind.

15. Rezirkulationsstruktur nach Anspruch 14, **dadurch gekennzeichnet, dass** die Leitelemente (37 bis 40) durch Schmieden oder Gießen oder durch elektrochemische Bearbeitung (ECM) und/oder spanabhebend gefertigt sind.

16. Rezirkulationsstruktur nach Anspruch 14 oder 15, **dadurch gekennzeichnet, dass** die Ringkammer (29 bis 32) spanabhebend und/oder durch Gießen oder Schmieden gefertigt ist.

17. Rezirkulationsstruktur nach einem der vorhergehenden Ansprüche, **dadurch gekennzeichnet, dass** sie ein- oder mehrfach gehäusefest, d.h. statisch, im Bereich eines oder mehrerer Laufschaufelkränze (20,23,24) und/oder ein- oder mehrfach nabenfest, d.h. rotierend, im Bereich eines oder mehrerer Leitschaufelkränze (15) angeordnet ist.

18. Rezirkulationsstruktur nach einem der vorhergehenden Ansprüche, **dadurch gekennzeichnet, dass** der Strömungsdurchtritt in Umfangsrichtung durch Aussparungen (45 bis 50) erfolgt.

19. Rezirkulationsstruktur nach einem der vorhergehenden Ansprüche, **dadurch gekennzeichnet, dass** der Strömungsdurchtritt in Umfangsrichtung durch Aussparungen (45 bis 50) und/oder Öffnungen (58, 59) in den Leitelementen (37 bis 40, 56) im vorderen oder im vorderen und hinteren Bereich der Ringkammer (29 bis 32, 53) erfolgt.

## Claims

1. A recirculation structure for turbocompressors, especially of gas turbines, having an annular chamber disposed concentrically with the compressor axis in the region of the free ends of the blades of a blade ring, the axial centre of which annular chamber lies upstream of, that is to say in front of, the axial centre of the free ends of the blades and which annular chamber radially borders on the contour of the main flow channel, the so-called annular space, and having a multitude of guide elements disposed in the annular chamber and distributed over the circumference thereof, the annular chamber making it possible for flow to pass through in the circumferential direction in the forward and/or rearward region, and the guide elements being connected to at least one wall of the annular chamber and being otherwise free-standing, **characterised in that** the tips (41 to 44, 57) of the guide elements (37 to 40, 56) facing towards the annular space run along and/or near the contour (11, 12) of the main flow channel (9, 10) and axially overlap (UE 1 to UE 4) the free ends (25 to 28) of the blades or axially border on the region of the free ends (25 to 28) of the blades, and the ratio of the axial length (LR) of the annular chamber (29 to 32, 53) along the contour (11, 12) of the main flow channel (9, 10) to the axial length (LS) of the ends (25 to 28) of the blades is from 0.2 to 1.5.

2. A recirculation structure according to claim 1, **characterised in that** the ratio of the radial height (HR) to the axial length (LR) of the annular chamber (29 to 32, 53) is from 0.1 to 1.0.

3. A recirculation structure according to claim 1 or claim 2, **characterised in that** the axially forward wall (33, 54) and the axially rearward wall (34, 55) of the annular chamber (29 to 32, 53), starting at their continuous circular edges (35, 36) on the contour (11) of the main flow channel (9), are inclined upstream, that is to say, are slanted towards the front, at the same or a different angle (α).

4. A recirculation structure according to claim 3, **characterised in that** the angle (α) of the axially forward and the axially rearward wall of the annular chamber, starting from the radial direction, has a value in the range of from 30° to 60°.

5. A recirculation structure according to any one of the preceding claims, **characterised in that** the guide elements (37 to 40, 56) are constructed to be scoop-shaped, three-dimensionally curved, of varying thickness and with defined profile sections.

6. A recirculation structure according to any one of the preceding claims, **characterised in that** the guide elements (37 to 40, 56) - viewed in the axial direction - are inclined in the circumferential direction by an angle (β) or are curved in the circumferential direction, wherein the angle (β) may vary over the length of the guide elements (37 to 40, 56) and is so selected that the entry of the of the recirculation flow into the annular chamber (29 to 32, 53) is facilitated in terms of fluid mechanics, that is to say, is favourable in terms of flow.

7. A recirculation structure according to any one of the preceding claims, **characterised in that** the tips (43) of the guide elements (39) facing towards the annular space are radially set back, at least in the region of the free ends (27) of the blades, to an extent such that, in normal operation of the turbocompressor, there is no contact between the ends (27) of the blades and the guide elements (39).

8. A recirculation structure according to any one of the preceding claims, **characterised in that** the guide elements (37 to 40) consist of a metal, such as steel or a Ni-based or Co-based alloy, a light metal, such as Al, or a plastics material, such as a thermoplastic, a thermosetting plastic or an elastomer.

9. A recirculation structure according to claim 8, **characterised in that**, in the case of guide elements made of light metal or plastics material, the tips (41 to 44) of the guide elements (37 to 40) facing towards the annular space lie so close to the free ends (25 to 28) of the blades that, in operation, contact is possible.

10. A recirculation structure according to any one of the preceding claims, **characterised in that** the flow in the circumferential direction passes through openings (58, 59) in the forward and/or rearward region of the guide elements (37 to 40, 56).

11. A recirculation structure according to any one of the preceding claims, **characterised in that** the annular chamber (29 to 32, 53) and the guide elements (37 to 40, 56) are formed integrally with a component (5 to 7, 8, 52) that accommodates them.

12. A recirculation structure according to any one of claims 1 to 10, **characterised in that** the annular chamber (29 to 32, 53) including the guide elements (37 to 40, 56) is constructed in one piece or in the form of at least two segments abutting one another in the circumferential direction and is detachably fastened to a component (5 to 7, 8, 52) that accommodates it.

13. A recirculation structure according to claim 11 or claim 12, **characterised in that** it is manufactured by casting, especially precision casting, or by chip-removing machining or electrochemical machining (ECM).

14. A recirculation structure according to any one of claims 1 to 10, **characterised in that** the guide elements (37 to 40) are constructed separately as individual components or groups of components, especially guide element segments, and are detachably fastened in the annular chamber (29 to 32).

15. A recirculation structure according to claim 14, **characterised in that** the guide elements (37 to 40) are manufactured by forging or casting or by electrochemical machining (ECM) and/or by chip-removing machining.

16. A recirculation structure according to claim 14 or claim 15, **characterised in that** the annular chamber (29 to 32) is manufactured by chip-removing machining and/or by casting or forging.

17. A recirculation structure according to any one of the preceding claims, **characterised in that** one or a plurality of them is fixed to the casing, that is to say so as to be static, in the region of one or more rotating blade rings (20, 23, 24) and or one or a plurality of them is fixed to the hub, that is to say so as to rotate, in the region of one or more guide blade rings (15).

18. A recirculation structure according to any one of the preceding claims, **characterised in that** the flow in the circumferential direction passes through recesses (45 to 50).

19. A recirculation structure according to any one of the preceding claims, **characterised in that** the flow in the circumferential direction passes through recesses (45 to 50) and/or openings (58, 59) in the guide elements (37 to 40, 56) in the forward or in the forward and rearward region of the annular chamber (29 to 32, 53).

## Revendications

1. Structure de recirculation pour un turbocompresseur, en particulier pour des turbines à gaz, avec une chambre annulaire qui est disposée de manière concentrique par rapport à l'axe du compresseur dans la zone des extrémités libres des pales d'une couronne de pales, dont le centre axial se trouve en amont du flux, c'est-à-dire devant le centre axial des extrémités libres des pales, et qui est limitrophe dans le sens radial avec le contour du canal d'écoulement principal, appelé le compartiment annulaire, et avec une pluralité d'éléments de guidage disposés dans la chambre annulaire et répartis sur le pourtour de celle-ci, la chambre annulaire permettant dans la zone avant et/ou dans la zone arrière un passage du flux en direction du pourtour et les éléments de guidage étant reliés avec au moins une paroi de la chambre annulaire et étant réalisés avec une disposition libre pour le reste, **caractérisée en ce que** les pointes dirigées vers le compartiment annulaire (41 à 44, 57) des éléments de guidage (37 à 40, 56) s'étendent sur le et/ou à proximité du contour (11, 12) du canal d'écoulement principal (9, 10) et présentent un dépassement (UE 1 à UE 4) dans le sens axial par-dessus les extrémités libres des pales (25 à 28) ou sont limitrophes dans le sens axial avec la zone des extrémités libres des pales (25 à 28) et **en ce que** le rapport entre la longueur axiale (LR) de la chambre annulaire (29 à 32, 53) au contour (11, 12) du canal d'écoulement principal (9, 10) et la longueur axiale (LS) des extrémités des pales (25 à 28) est de 0,2 à 1,5.

2. Structure de recirculation selon la revendication 1, **caractérisée en ce que** le rapport entre la hauteur radiale (HR) et la longueur axiale (LR) de la chambre annulaire (29 à 32, 53) est de 0,1 à 1,0.

3. Structure de recirculation selon la revendication 1 ou 2, **caractérisée en ce qu'**en partant de leurs bords circulaires s'étendant en forme de cercles (35, 36), la paroi avant dans le sens axial (33, 54) et la paroi arrière dans le sens axial (34, 55) de la chambre annulaire (29 à 32, 53) sont inclinées sur le contour (11) du canal d'écoulement principal (9) selon le même angle (α) ou selon un angle (α) différent vers l'amont du flux, c'est-à-dire en biais vers l'avant.

4. Structure de recirculation selon la revendication 3, **caractérisée en ce qu'**en partant de la direction radiale, l'angle (α) de la paroi avant dans le sens axial et de la paroi arrière dans le sens axial de la chambre annulaire a une valeur comprise entre 30° et 60°.

5. Structure de recirculation selon l'une quelconque des revendications précédentes, **caractérisée en ce que** les éléments de guidage (37 à 40, 56) sont réalisés en forme de pales, avec une courbure spatiale, avec une épaisseur variable et avec des sections transversales définies.

6. Structure de recirculation selon l'une quelconque des revendications précédentes, **caractérisée en ce que** les éléments de guidage (37 à 40, 56) sont - en regardant dans le sens axial - disposés avec une inclinaison de la valeur d'un angle (β) en direction du pourtour ou avec une courbure en direction du pourtour, l'angle (β) pouvant varier sur la longueur des éléments de guidage (37 à 40, 56) et étant choisi de telle façon que l'entrée du flux de recirculation dans la chambre annulaire (29 à 32, 53) soit facilitée du point de vue de son écoulement, c'est-à-dire qu'elle ait lieu avec un flux favorable.

7. Structure de recirculation selon l'une quelconque des revendications précédentes, **caractérisée en ce que** les pointes (43) des éléments de guidage (39) qui sont dirigées vers le compartiment annulaire sont, au moins dans la zone des extrémités libres (27) des pales, reculées suffisamment loin dans le sens radial pour que, lors du fonctionnement normal du turbocompresseur, aucun contact ne se produise entre les extrémités (27) des pales et les éléments de guidage (39).

8. Structure de recirculation selon l'une quelconque des revendications précédentes,
**caractérisée en ce que** les éléments de guidage (37 à 40) se composent d'un métal tel que l'acier ou un alliage de base comportant du nickel ou du cobalt, d'un métal léger tel que l'aluminium ou d'un matériau synthétique tel que les matières thermoplastiques, les résines thermodurcissables ou les élastomères.

9. Structure de recirculation selon la revendication 8, **caractérisée en ce qu'**en cas d'éléments de guidage en métal léger ou en matériau synthétique, les pointes (41 à 44) des éléments de guidage (37 à 40) qui sont dirigées vers le compartiment annulaire se trouvent suffisamment près des extrémités libres (25 à 28) des pales qu'un contact soit possible lors du fonctionnement.

10. Structure de recirculation selon l'une quelconque des revendications précédentes, **caractérisée en ce que** le passage du flux en direction du pourtour a lieu par l'intermédiaire d'ouvertures (58, 59) se trouvant dans la zone avant et/ou dans la zone arrière des éléments de guidage (37 à 40, 56).

11. Structure de recirculation selon l'une quelconque des revendications précédentes, **caractérisée en ce que** la chambre annulaire (29 à 32, 53) et les éléments de guidage (37 à 40, 56) sont configurés intégralement avec un composant (5 à 7, 8, 52) dans lequel ils sont logés.

12. Structure de recirculation selon l'une quelconque des revendications 1 à 10, **caractérisée en ce que** la chambre annulaire (29 à 32, 53), y compris les éléments de guidage (37 à 40, 56), est réalisée d'une seule pièce ou comme au moins deux segments attenants l'un à l'autre dans la direction du pourtour et est fixée de manière amovible sur un composant (5 à 7, 8, 52) dans lequel elles est logée.

13. Structure de recirculation selon la revendication 11 ou 12, **caractérisée en ce qu'**elle est réalisée par coulée, en particulier par coulée de précision, ou par usinage avec enlèvement de copeaux ou par usinage électrochimique (ECM).

14. Structure de recirculation selon l'une quelconque des revendications 1 à 10, **caractérisée en ce que** les éléments de guidage (37 à 40) sont réalisés séparément comme composants individuels ou comme groupes de composants, en particulier comme segments d'éléments de guidage, et sont fixés de manière amovible dans la chambre annulaire (29 à 32).

15. Structure de recirculation selon la revendication 14, **caractérisée en ce que** les éléments de guidage (37 à 40) sont réalisés par forgeage ou par coulée ou par usinage électrochimique (ECM) et/ou par usinage avec enlèvement de copeaux.

16. Structure de recirculation selon la revendication 14 ou 15, **caractérisée en ce que** la chambre annulaire (29 à 32) est réalisée par usinage avec enlèvement de copeaux et/ou par coulée ou par forgeage.

17. Structure de recirculation selon l'une quelconque des revendications précédentes, **caractérisée en ce qu'**elle fait l'objet d'une disposition simple ou multiple en solidarité avec le boîtier, c'est-à-dire de manière statique, dans la zone d'une ou de plusieurs couronnes de pales mobiles (20, 23, 24), et/ou d'une disposition simple ou multiple en solidarité avec le moyeu, c'est-à-dire en rotation, dans la zone d'une ou de plusieurs couronnes de pales de guidage (15).

18. Structure de recirculation selon l'une quelconque des revendications précédentes, **caractérisée en ce que** le passage du flux en direction du pourtour a lieu par l'intermédiaire d'évidements (45 à 50).

19. Structure de recirculation selon l'une quelconque des revendications précédentes, **caractérisée en ce que** le passage du flux en direction du pourtour a lieu dans la zone avant ou dans la zone avant et dans la zone arrière de la chambre annulaire (29 à 32, 53) par l'intermédiaire d'évidements (45 à 50) et/ou par l'intermédiaire d'ouvertures (58, 59) se trouvant dans les éléments de guidage (37 à 40, 56).
